# EUROPÄISCHE PATENTSCHRIFT

(11) **EP 1 682 799 B1**
(45) Veröffentlichungstag und Bekanntmachung des Hinweises auf die Patenterteilung: **06.02.2008**
(21) Anmeldenummer: 04786942.5
(22) Anmeldetag: 14.09.2004
(51) Int. Cl.: F16H 59/02, G05G 1/10

(54) **KNAUF FÜR EINEN BEDIENHEBEL EINES KRAFTFAHRZEUGES**
KNOB FOR A MOTOR VEHICLE CONTROL LEVER
POMMEAU DE LEVIER DE VITESSES POUR VEHICULE

(30) Priorität: 27.10.2003 DE 10350249
(43) Veröffentlichungstag der Anmeldung: 26.07.2006
(73) Patentinhaber: Dr. Ing. h.c. F. Porsche Aktiengesellschaft, 70435 Stuttgart (DE); Eissmann Automotive Deutschland GmbH, 72574 Bad Urach (DE)
(72) Erfinder: EGERTER, Markus, 72657 Altenriet (DE); NETZKER, Ralf-Maria, 71636 Ludwigsburg (DE); CASPER, Thomas, 66636 Theley (DE)
(86) Internationale Anmeldenummer: PCT/EP2004/010238
(87) Internationale Veröffentlichungsnummer: WO 2005/052413

(56) Entgegenhaltungen:
- EP-A- 0 772 112
- DE-U- 20 108 566
- DE-U- 20 311 547
- US-A- 4 724 718
- US-B1- 6 421 881

## Beschreibung

Die Erfindung betrifft einen Knauf für einen Bedienhebel eines Kraftfahrzeuges gemäß den Merkmalen des Oberbegriffs des Patentanspruchs 1.

Bedienhebel, wie z.B. Schalt- bzw. Wählhebel für Kraftfahrzeuggetriebe sind an ihrem Ende mit einem Knauf versehen, der als Handgriff für die Bedienperson vorgesehen ist. Zur Befestigung des Knaufs auf dem Bedienhebel ist der Knauf mit einer Aufnahmeöffnung für den Bedienhebel versehen. Aufgrund möglicher Toleranzen bei der Herstellung des Bedienhebels besteht die Gefahr, dass der Knauf bei einem Untermaß der Bedienhebelstange auf dieser wackelt und dadurch eine sichere Fixierung des Knaufs auf der Bedienhebelstange nicht mehr gewährleistet ist. Auf der anderen Seite besteht bei einem Übermaß der Bedienhebelstange die Gefahr, dass diese nicht mehr in die Aufnahmeöffnung des Knaufes eingeschoben werden kann.

Aus der EP 0 772 112 A1 ist ein Knauf mit einem Knaufkörper bekannt, bei dem eine Befestigungsvorrichtung an einem Schalthebel vorgesehen ist, durch die die Positionierung des Knaufes in Bezug auf den Schalthebel durch ein elastisches Verformen von axialen Feststellfortsätzen in Form von Sicherungsvorsprüngen erzielt wird.

Aufgabe der vorliegenden Erfindung ist es deshalb, einen Knauf zu entwickeln, der trotz möglicher Toleranzen insbesondere in den Abmessungen der Bedienhebelstange eine sichere und dauerhaltbare Fixierung des Knaufs auf dem Bedienhebel gewährleistet.

Die Aufgabe wird durch die im Anspruch 1 angegebenen Merkmale gelöst.

Dadurch, dass die Aufnahme für den Bedienhebel zumindest teilweise eine Auskleidung aus einem nachgiebigen Material aufweist, ist der Innendurchmesser bzw. die lichte Weite der Aufnahme reduziert. Beim Aufstecken des Knaufes bzw. des Griffstückes auf den Bedienhebel wird dieses nachgiebige Material verdrängt und dient als radiale Anlagefläche für die Bedienhebelstange. Auch bei Toleranzabweichungen in den Abmessungen der Bedienhebelstange ist damit eine sichere Fixierung des Knaufs auf dem Bedienhebel gewährleistet.

Durch die in den Unteransprüchen angegebenen Merkmale sind weitere vorteilhafte Ausgestaltungen und Weiterbildungen des Knaufs möglich.

Der Knaufkörper besteht aus einem Schaft- und einem Kopfteil, die von einem Hüllkörper umgeben sind, wobei in der Mantelfläche des Schaftes Öffnungen vorgesehen sind, die von Abschnitten des Hüllkörpers durchdrungen sind. Der elastisch ausgebildete Hüllkörper verbessert einerseits die Haptik des Knaufs und gleichzeitig stellen die in die Öffnungen des Schaftes eingreifenden Abschnitte des Hüllkörpers die Auskleidung für die Aufnahme dar, die einen festen Sitz des Knaufs auf dem Bedienhebel sicherstellt.

Für eine sichere und dauerhaltbare Fixierung des Knaufs auf dem Bedienhebel erstrecken sich die Öffnungen sowohl in axialer Richtung als auch in Umfangsrichtung des Schaftteiles.

Die im Schaftteil vorgesehenen Öffnungen sind als fensterartige Ausnehmungen ausgebildet, so dass auf vorteilhafte Art und Weise die die Ausnehmungen durchgreifenden Abschnitte des Hüllkörpers Rippen bilden, die als Anlageflächen bzw. als Auskleidung für den sich in der Aufnahme befindenden Bedienhebelabschnitt dienen. Während der Grundkörper aus einem Hartkunststoff besteht, ist der Hüllkörper aus einem elastischen, thermoplastischen Kunststoff oder einem anderen weichen Material, wie z. B. Polyurethan aufgebaut.

Zur axialen Festlegung des Knaufs auf dem Bedienhebel ist im Kopfteil des Grundkörpers eine Rastiervorrichtung vorgesehen. Die Rastiervorrichtung weist mehrere Schnapphaken auf, die mit einer im Bedienhebel eingebrachten Ausnehmung zusammenwirken, wobei die Schnapphaken zur Versteifung außen mit Rippen versehen sind.

Zur besseren Verankerung des Hüllkörpers am Grundkörper sind vom Schaft- zum Kopfteil des Grundkörpers verlaufende Außenrippen angeformt.

Der in die Aufnahme des Knaufs eingesteckte Abschnitt des Bedienhebels ist beidseitig abgeflacht, wobei die Innenkontur der Aufnahme des Knaufes der Kontur dieses Bedienhebelabschnittes angepasst ist. Dadurch ist der Knauf auf dem Bedienhebel verdrehsicher befestigt. Die abgeflachten Seiten des Bedienhebels dienen dabei als Anlageflächen für die aus dem Hüllkörper herausgebildeten Rippen.

Zur Herstellung des Knaufes wird der Grundkörper auf eine dem Bedienhebel nachgebildete Bedienhebel-Vorrichtung aufgesteckt und von einer Form umschlossen. Zum Aufbringen des Hüllkörpers wird diese Form mit einem elastischen, thermoplastischen Kunststoff z.B. im Spritzgießverfahren gefüllt oder alternativ dazu mit einem Polyurethanschaum ausgeschäumt, wobei dabei gleichzeitig die Rippen für die radiale Festlegung des Knaufes auf dem Bedienhebel hergestellt werden. Nach dem Aushärten kann der Knauf von der Bedienhebel- Vorrichtung abgezogen und gff. nach seiner endgültigen Fertigstellung auf dem eigentlichen Bedienhebel befestigt werden.

Auf der Stirnseite des Knaufes ist weiterhin ein Plakettenträger vorgesehen; darüber hinaus sind seitlich am Kopf des Knaufes zwei Zierblenden am Grundkörper befestigt. Zur weiteren optischen Aufwertung des Knaufes ist dieser mit Leder überzogen.

Ein Ausführungsbeispiel der Erfindung ist in der Zeichnung dargestellt und wird nachfolgend näher erläutert.

Es zeigen:
- Fig. 1: eine Perspektivansicht auf einen Grundkörper eines Knaufs,
- Fig. 2: eine Seitenansicht auf den Grundkörper des Knaufs,
- Fig. 3: einen Schnitt durch einen komplettierten Knauf entlang der Schnittlinie III - III in Fig. 2,

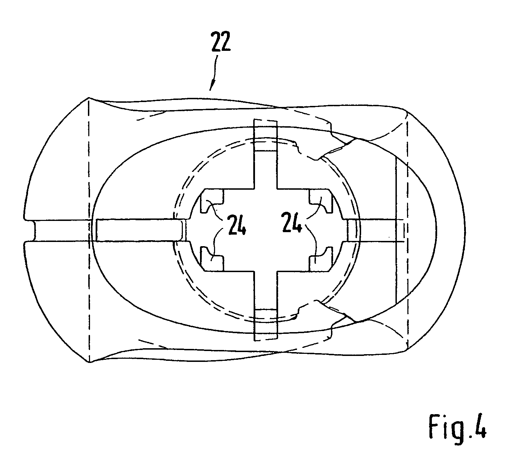

- Fig. 4: eine Darstellung eines Hüllkörpers des Knaufs,
- Fig. 5: eine erste Teilansicht eines Bedienhebels und
- Fig. 6: eine zweite Teilansicht des Bedienhebels.

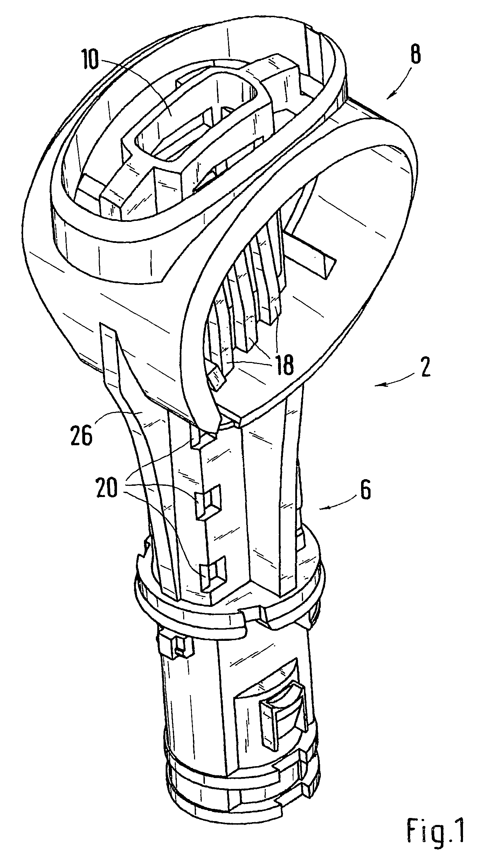

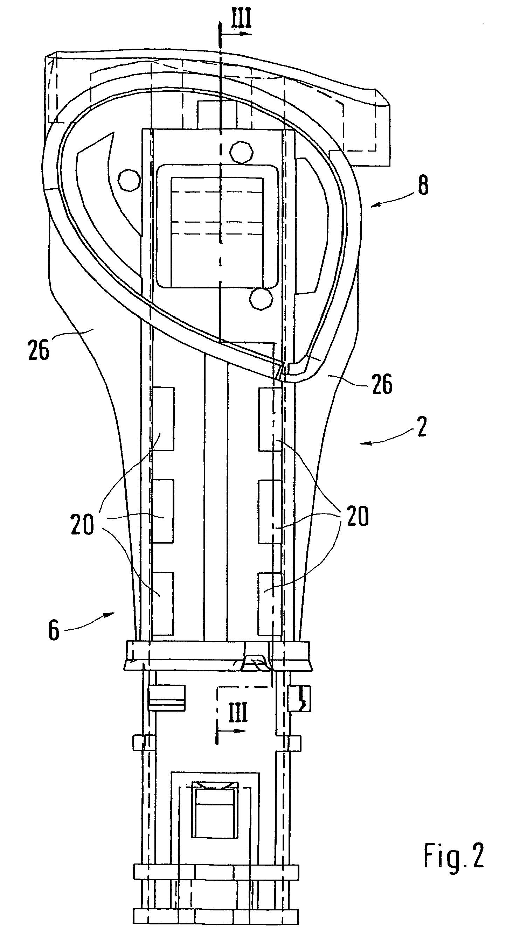

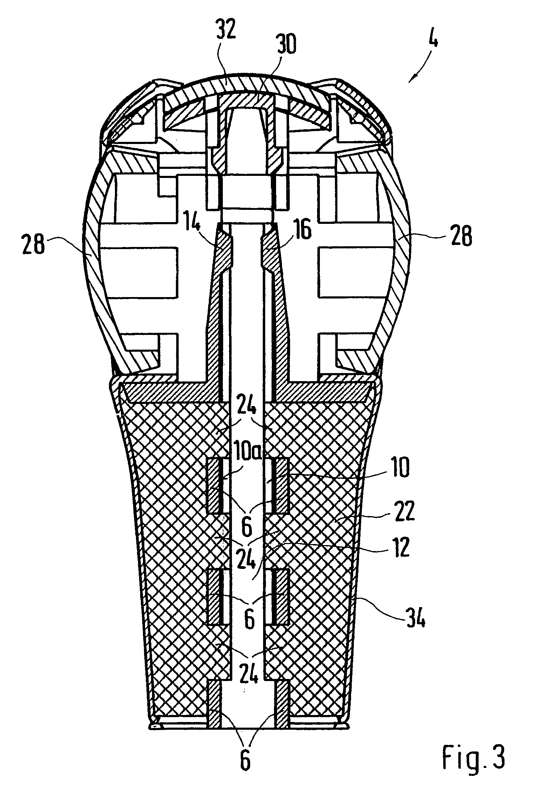

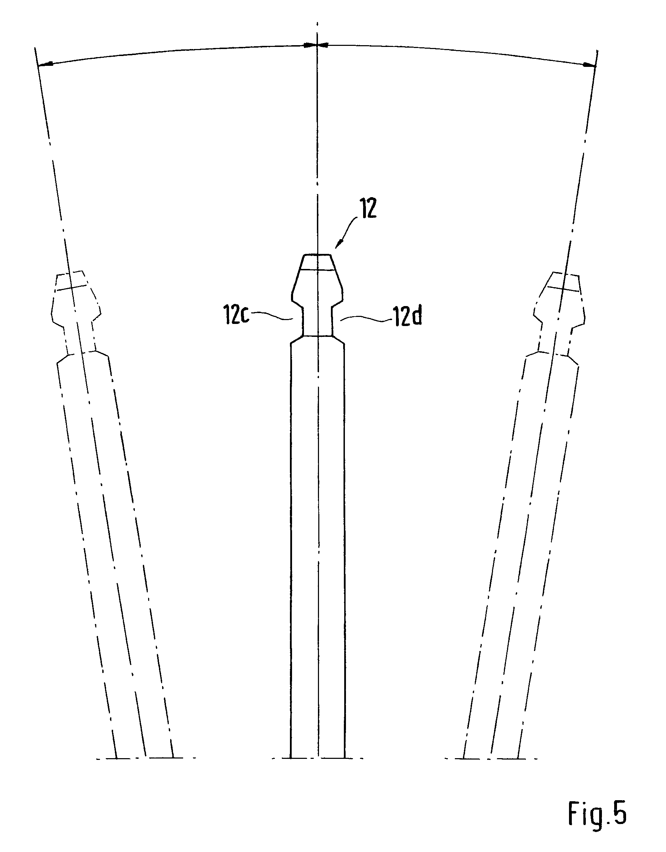

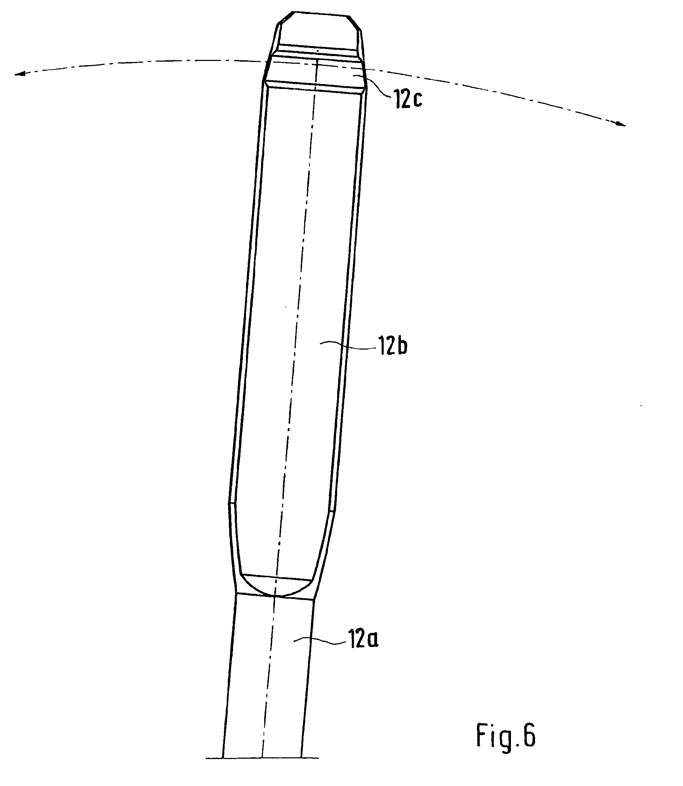

In Fig. 1 und 2 ist ein aus einem Hartkunststoff bestehender Grundkörper 2 eines in Fig. 3 im Längsschnitt dargestellten Knaufs 4 dargestellt. Der Grundkörper 2 ist dabei in ein Schaft- und Kopfteil 6, 8 unterteilt, wobei im Inneren des Grundkörpers 2 eine Aufnahme 10 für einen Bedienhebel 12 vorgesehen ist. Der Bedienhebel 12 ist dabei als Schalt- bzw. Wählhebel für das Einlegen von Gängen bei einem Kraftfahrzeuggetriebe vorgesehen und wird im nachfolgenden zur Vereinfachung lediglich als Schalthebel 12 bezeichnet. Der Schalthebel 12 weist einen rohrförmigen Abschnitt 12a auf, der zu einer nicht dargestellten Schaltkulisse führt, während ein auf beiden Seiten hin abgeflachter Abschnitt 12b des Schalthebels 12 in die Aufnahme 10 eingesteckt ist. Während in Fig. 5 die Vorwähl- Bewegung der Gänge durch seitliches Verschwenken des Schalthebels 12 dargestellt ist, wird der Schalthebel 12 zum Einlegen der Gänge in die in Fig. 6 anhand der strichpunktierten Linie dargestellte Richtung bewegt. Wie aus Fig. 3 ersichtlich, ist die Ausnehmung 10 im Bereich des abgeflachten Abschnittes 12b des Schalthebels 12 mit einem größeren Innendurchmesser versehen, so dass sich zwischen Innenwandung 10a der Ausnehmung 10 und dem abgeflachten Abschnitt 12b ein entsprechender Freiraum ausbildet.

Zur axialen Sicherung des Grundkörpers 2 bzw. des Knaufes 4 auf dem Schalthebel 12 sind am oberen Ende des abgeflachten Abschnittes 12b zwei Ausnehmungen 12c und 12d vorgesehen, in die jeweils ein aus dem Kopfteil 8 herausgebildeter Schnapphaken 14 und 16 formschlüssig eingreift. Zur Versteifung der Schnapphaken 14, 16 sind diese auf ihrer Außenseite mit Verstärkungsrippen 18 versehen. In Fig. 3 ist dabei das aus dem Grundkörper 2 herausgebildete Kopfteil 8 nur im Bereich der Schnapphaken 14, 16 geschnitten dargestellt.

Das Schaftteil 6 des Grundkörpers 2 weist auf seiner Mantelfläche sich sowohl in axialer als auch in Umfangsrichtung erstreckende Öffnungen 20 auf, die als fensterartige Ausnehmungen ausgebildet sind und mit der Aufnahme 10 für den Schalthebel 12 in Verbindung stehen. Wie aus Fig. 3 ersichtlich, sind die Öffnungen 20 von Abschnitten 24 eines den Grundkörper 2 umgebenden Hüllkörpers 22 durchdrungen; diese Abschnitte 24 sind aufgrund der fensterartigen Ausnehmungen als Rippen 24 ausgebildet. Die Rippen 24 dienen als radiale Anlageflächen für den abgeflachten Abschnitt 12b der Schaltstange 12, so dass damit der Knauf 4 verdrehsicher und spielfrei auf der Schaltstange 12 befestigt ist. Die Rippen 24 und damit auch der Hüllkörper 22 bestehen aus einem elastischen, thermoplastischen Kunststoff, so dass trotz Abweichungen in den Aussenabmessungen des abgeflachten Abschnitts 12b der Schaltstange 12 eine sichere Befestigung des Knaufes 4 auf dem Schalthebel 12 gewährleistet ist.

Der Grundkörper 2 weist vom Schaft- zum Kopfteil 6, 8 verlaufende Rippen 26 auf, die eine bessere Verankerung des Hüllkörpers 22 auf dem Grundkörper 2 gewährleisten.

Das Kopfteil 8 des Grundkörpers 2 weist weiterhin seitlich zwei Öffnungen auf, die von jeweils einer Zierblende 28 abgedeckt sind. Am oberen Ende des Schalthebels 12 ist ein Plakettenträger 30 aufgesteckt, auf dem wiederum eine Plakette 32 befestigt ist, die beispielsweise die Schaltanordnung der einzelnen Gänge aufzeigt. Zur optischen Aufbesserung ist der Hüllkörper 22 weiterhin mit einem Überzug 34, der z. B. aus Leder besteht, versehen.

Der Knauf 4 wird dabei auf folgende Art und Weise hergestellt:

Der Grundkörper 2 wird auf eine Schaltstangen- Vorrichtung aufgesteckt und mit einer im Abstand zum Grundkörper 2 gehaltenen Form umschlossen, deren Negativ der Aussenkontur des späteren Hüllkörpers 22 entspricht. Zur Herstellung des Hüllkörpers 22 wird dann der elastische, thermoplastische Kunststoff eingespritzt, oder ein anderes weiches Material, wie z.B. Polyurethan eingeschäumt. Nach dem Aushärten des eingeschäumten Materials wird die Form entfernt und der Knauf 4 durch Bestückung der Zierblenden 28, des Plakettenträgers 30, der Plakette 32 und des Überzuges 34 komplettiert. Dadurch, dass die Rippen 24 bzw. der Hüllkörper 22 insgesamt aus einem elastischen Material aufgebaut sind, kann der ausgeschäumte Knauf 4 ohne Beschädigung von der Schaltstangen- Vorrichtung abgezogen werden.

Der für das Schalten der Gänge eines Kraftfahrzeuggetriebes vorgesehene Schaltknauf ist selbstverständlich nicht auf diesen Anwendungszweck eingeschränkt, sondern kann generell bei Bedienhebeln eingesetzt werden.

## Patentansprüche

1. Knauf bzw. Griffstück für einen Bedienhebel eines Kraftfahrzeuges, mit einem Knaufkörper, der eine Aufnahme für den Bedienhebel aufweist, wobei die Aufnahme (10) eine Auskleidung aus einem nachgiebigen Material aufweist, die zur Festlegung des Knaufs (4) auf dem Bedienhebel (12) vorgesehen ist,
**dadurch gekennzeichnet, dass**
der Knaufkörper aus einem Grundkörper (2) mit einem Schaft- (6) und einem Kopfteil (8) besteht, die zumindest teilweise von einem elastisch ausgebildeten Hüllkörper (22) umgeben sind, und dass in der Mantelfläche des Schaftteiles (6) Öffnungen (20) vorgesehen sind, die von Abschnitten (24) des Hüllkörpers (22) durchdrungen sind.

2. Knauf nach Anspruch 1, **dadurch gekennzeichnet, dass** sich die Öffnungen (20) in axialer Richtung und in Umfangsrichtung des Schaftteiles (6) erstrecken.

3. Knauf nach einem der vorhergehenden Ansprüche, **dadurch gekennzeichnet, dass** die Öffnungen als fensterartige Ausnehmungen (20) ausgebildet sind, so dass die in die Ausnehmungen (20) eingreifenden Abschnitte des Hüllkörpers (22) Rippen (24) bilden.

4. Knauf nach einem der vorhergehenden Ansprüche, **dadurch gekennzeichnet, dass** der Grundkörper (2) aus einem Hartkunststoff und der Hüllkörper (22) aus einem elastischen, thermoplastischen Kunststoff oder aus Polyurethan bestehen.

5. Knauf nach einem der Ansprüche 1 bis 4, **dadurch gekennzeichnet, dass** im Kopfteil (8) des Grundkörpers (2) eine Rastiervorrichtung (16) zur axialen Festlegung des Knaufs (4) auf dem Bedienhebel (12) vorgesehen ist.

6. Knauf nach Anspruch 5, **dadurch gekennzeichnet, dass** die Rastiervorrichtung aus mehreren Schnapphaken (16) besteht, die jeweils in eine am Bedienhebel (12) vorgesehene Ausnehmung (12c, d) eingreifbar sind.

7. Knauf nach Anspruch 6, **dadurch gekennzeichnet, dass** die Schnapphaken (16) auf ihrer Außenseite zur Versteifung mit Rippen (18) versehen sind.

8. Knauf nach einem der Ansprüche 2 bis 7, **dadurch gekennzeichnet, dass** vom Schaftteil (6) zum Kopfteil (8) des Grundkörpers (2) verlaufende Außenrippen (26) zur Verankerung des Hüllkörpers (22) vorgesehen sind.

9. Knauf nach einem der Ansprüche 2 bis 8, **dadurch gekennzeichnet, dass** der Hüllkörper (22) durch Ausspritzen oder Ausschäumen einer den Grundkörper (2) aufnehmenden Form herstellbar ist.

## Claims

1. Knob or gripping piece for a motor vehicle control lever, with a knob body which has a receptacle for the control lever, the receptacle (10) having a lining made of a flexible material, which is provided for fixing the knob (4) on the control lever (12), **characterized in that** the knob body comprises a basic body (2) with a stem part (6) and a head part (8), which parts are at least partially surrounded by an enveloping body (22) of elastic design, and **in that** openings (20) which are penetrated by sections (24) of the enveloping body (22) are provided in the circumferential surface of the stem part (6).

2. Knob according to Claim 1, **characterized in that** the openings (20) extend in the axial direction and in the circumferential direction of the stem part (6).

3. Knob according to one of the preceding claims, **characterized in that** the openings are designed as window-like recesses (20) such that those sections of the enveloping body (22) which engage in the recesses (20) form ribs (24).

4. Knob according to one of the preceding claims, **characterized in that** the basic body (2) is composed of a hard plastic and the enveloping body (22) is composed of an elastic thermoplastic or of polyurethane.

5. Knob according to one of Claims 1 to 4, **characterized in that** a latching device (16) is provided in the head part (8) of the basic body (2) to axially fix the knob (4) on the control lever (12).

6. Knob according to Claim 5, **characterized in that** the latching device comprises a plurality of snap hooks (16) which can each engage in a recess (12c, d) provided on the control lever (12).

7. Knob according to Claim 6, **characterized in that** the snap hooks (16) are provided on their outside with ribs (18) for stiffening purposes.

8. Knob according to one of Claims 2 to 7, **characterized in that** external ribs (26) running from the stem part (6) to the head part (8) of the basic body (2) are provided for securing the enveloping body (22).

9. Knob according to one of Claims 2 to 8, **characterized in that** the enveloping body (22) can be produced by an injection-moulding or foaming process in a mould holding the basic body (2).

## Revendications

1. Pommeau ou poignée pour un levier de vitesses d'un véhicule automobile, avec un corps de pommeau qui présente un logement pour le levier de vitesses, sachant que le logement (10) présente un habillage en un matériau souple, qui est prévu pour l'immobilisation du pommeau (4) sur le levier de vitesses (12),
**caractérisé en ce que** le corps de pommeau est constitué d'un corps de base (2) avec une partie de queue (6) et une partie de tête (8) qui sont entourées au moins partiellement par un corps d'enveloppe (22) réalisé élastique, et **en ce que** des ouvertures (20) sont prévues dans la surface extérieure de la partie de queue (6), qui sont traversées par des parties (24) du corps d'enveloppe (22).

2. Pommeau selon la revendication 1, **caractérisé en ce que** les ouvertures (20) s'étendent dans la direction axiale et dans la direction circonférentielle de la partie de queue (6).

3. Pommeau selon l'une des revendications précédentes, **caractérisé en ce que** les ouvertures sont réalisées sous la forme d'évidements (20) du genre fenêtres, de sorte que les parties du corps d'enveloppe (22) qui s'engagent dans les évidements (20) forment des nervures (24).

4. Pommeau selon l'une des revendications précédentes, **caractérisé en ce que** le corps de base (2) est constitué d'un plastique dur et le corps d'enveloppe (22) d'un matériau thermoplastique élastique ou de polyuréthane.

5. Pommeau selon l'une des revendications 1 à 4, **caractérisé en ce qu'**un dispositif de crantage (16) est prévu dans la partie de tête (8) du corps de base (2) pour l'immobilisation axiale du pommeau (4) sur le levier de vitesses (12).

6. Pommeau selon la revendication 5, **caractérisé en ce que** le dispositif de crantage est constitué de plusieurs crochets à enclenchement (16) qui peuvent être respectivement engagés dans un évidement (12c, d) prévu sur le levier de vitesses (12).

7. Pommeau selon la revendication 6, **caractérisé en ce que** les crochets à enclenchement (16) sont pourvus sur leur côté extérieur de nervures (18) à des fins de renforcement.

8. Pommeau selon l'une des revendications 2 à 7, **caractérisé en ce que** des nervures extérieures (26) s'étendant de la partie de queue (6) à la partie de tête (8) du corps de base (2) sont prévues pour l'ancrage du corps d'enveloppe (22).

9. Pommeau selon l'une des revendications 2 à 8, **caractérisé en ce que** le corps d'enveloppe (22) peut être fabriqué en remplissant par injection ou par moussage un moule recevant le corps de base (2).
